# EUROPEAN PATENT SPECIFICATION

(11) **EP 1 941 000 B1**
(45) Date of publication and mention of the grant of the patent: **26.08.2015**
(21) Application number: 05801362.4
(22) Date of filing: 26.10.2005
(51) Int. Cl.: C08K 3/22, C08G 18/36, C09D 175/04, C09K 21/14, C09D 5/18, C08K 3/32, C08G 18/48, C08G 18/42, C08G 18/40, C09K 3/10, C08L 71/02, C08L 75/04, C08G 101/00, C08L 19/00

(54) **FIRE-RESISTANT COMPOSITION FOR COATING, SEALING AND PROTECTION PURPOSES**
FEUERWIDRIGE ZUSAMMENSETZUNG FÜR BESCHICHTUNGS-, DICHTUNGS- UND SCHUTZZWECKE
COMPOSITION RESISTANTE AU FEU A DES FINS DE REVETEMENT, SCELLEMENT ET PROTECTION

(43) Date of publication of application: 09.07.2008
(73) Proprietor: Industrial Property of Scandinavia AB, 192 51 Sollentuna (SE)
(72) Inventor: NYGREN, Sune Bertil, Brighton, East Sussex BN2 5RA, (GB)
(74) Representative: Valea AB
(86) International application number: PCT/SE2005/001615
(87) International publication number: WO 2007/050000

(56) References cited:
- WO-A1-01/85863
- WO-A1-98/37145
- US-A- 4 246 146
- US-A- 4 698 369
- US-A- 4 977 194
- US-A- 5 023 280
- US-A- 5 739 173
- US-A1- 2002 020 827
- US-A1- 2005 215 701
- US-B1- 6 245 842
- DATABASE WPI Week 198912, Derwent Publications Ltd., London, GB; Class A25, AN 1989-089997, XP008113462 & JP 01 040588 A (HITACHI CABLE LTD) 10 February 1989

## Description

### Technical field

The present invention relates to a fire-resistant composition for coating, sealing and protection purposes comprising an isocyanate curable polymer, a polymer curable isocyanate, an aliphatic polyether glycol and rubber.

The basic object of the composition of the present invention is to obtain a composition, which can be used as a coating of surfaces, which are subject to corrosion, and mechanical attacks; as a sealing agent for water and other liquids at tube joints, roofing, point-sealing of ceramic tiles, metal sheets, and the like, and which composition is very resistant to mechanical wear and attacks by chemicals including water, as well as they are fire-resistant in-doors as well as out-doors.

A further object is to obtain compositions that can be used in places and sites where a fire could be detrimental and cause violent accidents, such as on offshore oil platforms, ships, such as tankers, tunnels, such as road and railroad tunnels.

A further object of the invention is to obtain a fire-resistant coating composition that meets the highly set requirements determined by different standards.

A still further object is to obtain a fire-resistant coating composition that expels fire if it should catch fire.

SE-A-7709649-3 describes a corrosion resistant coating composition, particularly for external rust protection of vehicle chassis, which composition consists of a polyurethane polymer, waste rubber, water free black coal tar, zeolite drying agent. This composition fulfils generally its object, but has some disadvantages by strongly smelling of black coal tar, which prevents it from being used in more restricted spaces, and leads to the fact that well ventilated spaces are required at the application, as well. Further, the black coal tar leads to the fact that the coating obtains a black colour, which often may not be of any importance, but quite often is not acceptable, but instead a pigmented product with a colour pigment by choice being required.

Besides these drawbacks, which are of a certain cosmetic nature, one often requires a still higher wearing resistance, resistance against attack by chemicals, particularly in alkaline environment, and temperature stability.

WO9837145 discloses a solution to that problem by presenting a composition, which contains rubber with a particle size of at most 0,4 mm, being present in an amount of at most 50 % by weight, and an isocyanate curable polymer base of the polyhydroxy type in an amount of 40-55 % by weight, a polymer curing isocyanate in an amount of 18-30 % by weight, and an aliphatic polyether glycol in an amount of 1 to 5 % by weight and characterized in that it further comprises a cycloaliphatic amine to improve non-running properties by providing an active thixotropy.

WO 01/85863 shows a foam coated web of a flexible material which can be applied as an adhesive tape around cables when the web is in band form. The object is to obtain a vibration inhibitor. The foam may be made flame retardant by incorporating a fluorocarbon compound.

The product according the said WO 01/85863 is thus already present in a foam condition when applied, which is quite different from the present case where, in case of fire, the product will develop a protecting, isolating foam extinguishing the fire. The foam product is thus produced a vibration inhibiting protection which in no way hints at the solution of the problem of producing a flame safe, rubber containing coating composition which basicly is not a foam product.

US 4,246,146 discloses a method of producing a fire-retardant protective coating gel hat can be applied as a coating useful for protecting or holding together surfaces vulnerable to fire, heat, air or minor abrasion.

US 4,977,194 relates to a process for the preparation of polyurethane foams having improved flame properties based on dispersions containing polymer-containing relatively high molecular weight hydroxyl compounds in which the flameproofing agent is an expandable graphite used alone or in combination with an organic co-flameproofing agent.

US 2005/0215701 discloses a silane-terminated polyurethane composition comprising the reaction product of a silane-terminated polyurethane prepolymer component, a silane-terminated monomeric diisocyanate component, and optionally a trisilane or tetrasilane component.
The present product is not allow to foam when applied, as then there is a faulty product.

Thus the present invention is not hinted at in the prior art available, and in particular there is no knowledge of the positive flame retardant effect of powderous rubber.

The references above disclose that the curable prepolymer is preferably an isocyanate curable polyurethane (DESMODUR- hardener; DESMOPHEN 1150-prepolymer) but also isocyanate curable epoxy polymers can be used.

Suitable binding agents of polymer type which are curable by isocyanate active hardeners are different polyols, polyester bases, having a molecular weight of 200 and more. Other polymer materials are epoxy resins, which are primarily dissolved in a ketone, or a glycol ether, and are then cured using an isocyanate active hardener (e.g. DESMODUR) or amino group active hardener. Suitable epoxy resins have a molecular weight of 1000 or more.

The aliphatic polyether glycols used can either be a polyester, such as DESMOPHEN 1150, or the like, and/or an aliphatic glycol, or more simple, such as ethylene glycol, diethylene glycol, triethylene glycol.

All types of rubber can be used as a rubber material, such as waste rubber, waste rubber tires, raw rubber, and other rubber qualities.

Thus WO9837145 discloses that 20-40 % by weight of rubber powder, suitably waste rubber, having a particle size of 0,4 mm, preferably 0.05-0.2 mm, 40-50 % by weight of a polymer base, 1-5 % by weight of an aliphatic polyether glycol base, and 18-25 % by weight of an isocyanate hardener give excellent products within the scope of that invention. Thus these compositions have, in a cured state, a very high elasticity, and wearing resistance. In the case the polyester base contains moisture a zeolite drying agent should be added, alternatively active aluminium oxide, or basic aluminium silicates. Further a cycloaliphatic amine in an amount of 0.1 to 1.0 % by weight of the total composition is added. In a preferred embodiment the cycloaliphatic amine consists of 3,3-dimethyl-4,4 diamino dicyclohexyl methane present in an amount of 0.1 to 1.0 % by weight of the total composition, preferably in an amount of 0.3 to 0.7 % by weight.

The cycloaliphatic amine reacts with part of the isocyanate present and provides a rapid increase of the viscosity, before the isocyanate and the isocyanate curable polymer react to form the final coating.

Hereby a rapid pre-polymerisation is obtained within seconds after application of the total composition to a surface, thereby eliminating running and dripping of the composition from the surface treated.

In order to achieve non-settling properties of the composition stored, it is disclosed that the composition may further be made thixotropic by the addition of a soy bean derivative. The soybean derivative is present in an amount of about 0.5 % by weight of the total composition.

In a further embodiment of that composition, the composition is made non-moisture sensitive, the isocyanate-polyurethane system being sensitive to moisture, by the addition of a water absorbing agent such as an aluminium silicate, a zeolite, whereby the composition can be applied even in moist areas without risk of foaming, the water absorbing material is added, when desired, in an amount of 5-10 % by weight depending upon the moist conditions, such as present in a concrete mass when sealing e.g. road and bridge constructions.

It is also stated in the WO9837145 description that the composition may be made fire-resistant by the addition of a flame retarder to the composition such as a phosphite compound, which is added in an amount of 5-15 % by weight. Nowgard V-4 is an example of a retarder.

However, the requirements when it concerns fire-resistance are hard, and are controlled by different standards which coating materials used in fire hazardous should meet, whereby different standards are set with regard to in-door, and out-door uses, respectively.

A flame retarder of the above mentioned type does not meet these requirements set forth.

In short, the present standards require that a coating which has caught fire shall self-extinguish within a short time or within a certain area or length of coated test material. The standards to be met are IMO Resolution A.653(16) and IMO FTP Code, Annex 1, Part 5.

The criteria set forth are: according to IMO FTP Code, Annex 1, part 5 materials used as bulkhead, wall and ceiling linings must have surface flammability values meeting the following limits:

| | |
|---|---|
| CFE | ≥ 20.0 kW/m² |
| Q_{sb} | ≥ 1.5 MJ/m², |
| Qₜ | ≤ 0.7 MJ, and |
| Qₚ | ≤ 4.0 kW |

when tested according to IMO Resolution A.653(16), and materials used as floor coverings must have surface flammability values meeting the following limits:

| | |
|---|---|
| CFE | ≥ 7.0 kW/m² |
| Q_{sb} | ≥ 0.25 MJ/m², |
| Qₜ | ≤ 2.0 MJ, and |
| Qₚ | ≤ 10.0 kW |

when tested according to IMO Resolution A.653(16),
wherein CFE is critical flux of extinguishments, Q_{sb} is heat for sustained burning, Qₜ is total heat released and Qₚ is peak heat release rate.

According to IMO FTPC Part 5, section 2.2 (point 6, appendix unusual behaviour) shall for floor coverings, no more than 10 burning drops be acceptable.

According to IMO FTP Code, Annex 2, surface materials and primary deck coverings with both a total heat release (Qₜ) of not more than 0.2 MJ and a peak heat release rate (Qₚ) of not more than 1.0 kW when tested according to IMO Resolution A.653(16) are considered to comply with the requirements of Part 2 of annex 1 (criteria for smoke and toxicity given in the same document) without further testing.

### Summary of the present invention

In accordance with the present invention a coating comprising rubber particles, a polymer base, an aliphatic polyether glycol base, and an isocyanate hardener as well as an aluminium trihydrate and powderous graphite give excellent products within the scope of that invention, which products meet the requirements of the IMO Resolution mentioned above.

### Detailed description of the present invention

In particular the present invention relates to a fire-resistant composition for coating, filling, sealing, and protection comprising an isocyanate curable polymer, a polymer curable isocyanate, an aliphatic polyether glycol, and rubber,
characterized in that it further comprises ammonium polyphosphate, expanding graphite, and crystal water containing metal salt, which is water insoluble or very little water soluble.

In accordance with a preferred embodiment the crystal water containing metal salt is aluminium trihydrate.

In another preferred embodiment the composition comprises:
4 to 55% by weight of isocyanate curable polyurethane,
10 to 30% by weight of a polymer curing isocyanate,
3 to 10% by weight of a rubber having a particle size of at most 0.4 mm, preferably in the form of a fine granulate of not more than 0.1 mm,
1 to 5% of an aliphatic polyether glycol,
5 to 10 % by weight of expanding graphite preferably having a particle size of 0.080 to 0.300 mm,
10 to 30 % by weight of ammonium polyphosphate,
10 to 20 % by weight of aluminium trihydrate, preferably a powderous one having a particle size of not more than 0.050 mm.

In a further preferred embodiment the composition may optionally further contain
3 to 10 % by weight of melamin powder, preferably having a particle size of not more than 0.10 mm
1 to 3 % by weight of titanium oxide as rutile
5 to 10 % by weight of a carbon source, such as di-pentaerythritol, starch
2 to 10 % by weight of dicyanodiamide being a foam providing gas.

In a further preferred embodiment it further contains a zeolitic drying agent, an active aluminium oxide, an aluminium silicate and mixtures thereof to provide non-moisture sensitivity to the composition.

In another preferred embodiment the rubber powder further includes a coloring pigment.

Melamine powder will also serve as a provider of an inert diluting gas providing foam giving the expansion to the layer.

The expanding graphite, a carbon source, will expand when heated whereby the powderous form will expand longitudinally creating a network of isolating gas spheres provided by the melamine, and dicyanodiamide.

In a preferred embodiment aluminium trihydrate (Al₂O₃ x 3H₂O) is used as a water provider. However, other crystal water compounds can be used. One requirement, however, is that the used salt should not be water soluble, or at least very little watersoluble.

### EXAMPLE 1

175 parts per weight of castor oil, 56 parts of polypropylene glycol (Voranol^{®} P400), 50 parts of waste rubber having a particle size of 0.1 to 0.2 mm, 30 parts of zeolite to absorb any water present, 6.2 parts of rheological additive (thickening agent), Rilanit^{®} HT, 20 parts of TiO₂, 80 parts of expanding graphite, 100 parts of ammonium polyphosphate, and 80 parts of aluminium trihydrate, were intimately mixed with a mixture of 39.5 parts of DESMOPHEN 1150. To this second mixture 18 parts of an isocyanate active hardener (DESMODUR) were added for the curing of the polymer at the application of the total composition to an object, such as surface of concrete or metal.

The composition may preferably contain an accelerator of the polyurethane-isocyanate reaction, whereby such an accelerator is present in an amount of up to 6 parts per weight.

To provide for an improved wetting of the surface to be coated the composition can wetting agent in an amount of up to 0.50 parts per weight.

The composition of Example 1 above was tested in accordance with the IMO Resolution (details given above), whereby the coating was applied on a 50 mm thick insulation called "Foamglass" having a density of 125 kg/m³. The coating was applied to a thickness of range of 2 to 5 mm. A pilot flame was placed in parallel with the specimen.

The following observations were made during the fire test.

| Test | 1 | | 2 | | 3 | |
|---|---|---|---|---|---|---|
| The flame front reached, mm | Time min:s | Heat for sustained burning MJ/m² | Time min:s | Heat for sustained burning, MJ/m² | Time min:s | Heat for sustained burning, MJ/m² |
| 50 | 0:32 | 1.6 | 0:48 | 2.4 | 0:39 | 2.0 |
| 100 | 0:39 | 1.9 | 0:48 | 2.4 | 0:39 | 1.9 |
| 150 | 0:43 | 2.0 | 0:53 | 2.5 | 0:45 | 2.1 |
| 200 | 0:52 | 2.2 | 0:57 | 2.4 | 0:59 | 2.5 |
| 250 | 1:10 | 2.5 | 1:10 | 2.5 | 1:10 | 2.5 |
| 300 | 1:48 | 3.3 | 1:57 | 3.5 | 1:36 | 2.9 |
| 350 | 2:54 | 4.2 | 2:22 | 3.4 | 2:12 | 3.2 |
| Flames at flame front went out | 3:28 at 390 mm | | 4:20 at 380 mm | | 3:46 at 390 mm | |
| Burning droplets | No | | No | | No | |

### Derived fire characteristics

| Test no | 1 | 2 | 3 | Average |
|---|---|---|---|---|
| Heat for ignition, MJ/m² | 2.0 | 2.5 | 2.1 | 2.2 |
| Average heat for sustained burning, Q_{sb}, MJ/m² | 2.8 | 2.9 | 2.6 | 2.8 |
| Critical flux at extinguishment, CFE, kW/m² | 19.6 | 20.7 | 19.6 | 20.0 |
| Total heat release, Qₜ, MJ | 0.2 | 0.3 | 0.2 | 0.2 |
| Peak heat release rate, Qₚ, kW | 2.3 | 2.7 | 2.6 | 2.5 |

At burning/heat application a fire resistant charcoal foam will be formed. This charcoal foam has a strongly heat isolating effect which will have its main purpose in preventing or delaying the spread of fire. The isolating effect is mainly due to the height of the charcoal foam. It has, surprisingly turned out, that the powderous rubber present in the composition has a very positive effect with regard to the final foam height. When using 3 to 10% per weight of the rubber a foam height of 2 to 4 times that obtained when using no rubber, has been monitored. One theory is thereby that effect obtained using the composition of the invention of rubber and chemicals is probably that the energy content of the rubber powder is decisive The rubber content provides for an amount of energy that is enough to maintain a continued and efficient expansion of the chemicals present.

When using a similar, non-rubber containing composition, such as a lacquer, an expansion occurs in the surface layer when then decreases whereupon the foam layer obtained isolates from the heat source. In the interface between charcoal foam and non-expandable layer an unfavourable reaction - oxidation - of the ingoing components occurs so that a continued theoretical expansion will not occur.

The composition of the invention is used in a number of applications such as on building constructions, vehicles including trains, trucks, ships as well as off-shore platforms.

In connection with the preparation of the present composition one should preferably put the product under vacuum, whereby, in particular, the wearing resistance, and the chemical resistance are further improved. Furthermore, the aging resistance, moisture resistance, and the traction strength are improved. The pressure in the vacuum step for elimination of air should be 0.8 bar, but can in case of very high viscous compositions be further reduced down to 0.5-0.6 bar.

Application of the composition can be effected in different ways, such as by means of simple manual painting, by mechanical painting, as well as by means of high pressure spraying. At high pressure spraying a modified conventional high pressure spraying apparatus of two component type is suitably used, wherein the composition, exclusive of hardener, and hardener are brought together prior to the outlet of a mixing tube (mixer) and is brought forward to a spraying gun via a heat taped high pressure hose. The pressure on the composition shall be so high that a well distributed spraying mass is obtained (atomised), which, at viscosities of the composition normally appearing, is obtained at 160-200 kg/cm² and a temperature of, 40°C, preferably 40-80°C, more preferably 45-60°C.

Normally the viscosity of the composition is such that the high pressure pump as such does not manage to draw the composition into the apparatus as normal temperature. Thus, a pressure plate has been arranged to the high pressure spray apparatus, with success, which plate fits snugly into the vessel where the composition is prepared, whereupon the pressure plate is pressed down into the preparation vessel either mechanically, pneumatically, or hydraulically, so that the composition is pressed up into the high pressure spray apparatus.

In order to increase the curing of the composition above an accelerator of the curing reaction can be added in an amount of 0.1-0.5 % by weight. Examples of such accelerators are dibutyl distannium dilaurate or corresponding lead compounds.

The composition can be made thixotropic as well, by adding a suitable jelling substance.

## Claims

1. A fire-resistant composition for coating, filling, sealing, and protection comprising an isocyanate curable polymer, a polymer curable isocyanate, an aliphatic polyether glycol, and rubber,
**characterized in that** it further comprises ammonium polyphosphate, expanding graphite, and crystal water containing metal salt which is water insoluble or very little water soluble.

2. Composition according to claim 1, wherein the crystal water containing metal salt is aluminium trihydrate.

3. Composition according to claims 1-2, wherein the composition comprises:
4 to 55% by weight of an isocyanate curable polyurethane,
10 to 30% by weight of a polymer curing isocyanate,
3 to 10% by weight of a rubber having a particle size of at most 0.4 mm, preferably in the form of a fine granulate of not more than 0.1 mm,
1 to 5% of an aliphatic polyether glycol,
5 to 10 % by weight of expanding graphite preferably having a particle size of 0.080 to 0.300 mm,
10 to 30 % by weight of ammonium polyphosphate,
10 to 20 % by weight of aluminium trihydrate, preferably a powderous one having a particle size of not more than 0.050 mm.

4. Composition according to claim 3, wherein the composition may optionally further contain
3 to 10 % by weight of melamin powder, preferably having a particle size of not more than 0.10 mm
1 to 3 % by weight of titanium oxide as rutile
5 to 10 % by weight of a carbon source, such as di-pentaerythritol, starch
2 to 10 % by weight of dicyanodiamide being a foam providing gas.

5. Composition according to one or more of the preceding claims, wherein it further contains a zeolitic drying agent, an aluminium silicate and mixtures thereof to provide non-moisture sensitivity to the composition.

6. A composition according to one or more of the preceding claims, wherein the rubber powder further includes a colouring pigment.

## Patentansprüche

1. Feuerbeständige Zusammensetzung zum Beschichten, Füllen, Versiegeln und zum Schutz, die ein Isocyanat-härtbares Polymer, ein Polymer-härtbares Isocyanat, ein aliphatisches Polyether-Glycol und Gummi umfasst,
**dadurch gekennzeichnet, dass** dieselbe weiterhin Ammoniumpolyphosphat, Blähgraphit und Kristallwasser, das Metallsalz enthält, das wasserunlöslich oder sehr gering wasserlöslich ist, umfasst.

2. Zusammensetzung nach Anspruch 1, wobei das Kristallwasser, das Metallsalz enthält, Aluminiumtrihydrat ist.

3. Zusammensetzung nach den Ansprüchen 1 - 2, wobei die Zusammensetzung umfasst:
4 bis 55 Gewichtsprozent eines Isocyanat-härtbaren Polyurethans,
10 bis 30 Gewichtsprozent eines Polymer-härtenden Isocyanats,
3 bis 10 Gewichtsprozent eines Gummis mit einer Teilchengröße von höchstens 0,4 mm, bevorzugt in Form eines feinen Granulats von nicht mehr als 0,1 mm,
1 bis 5 Prozent eines aliphatischen Polyether-Glycols,
5 bis 10 Gewichtsprozent Blähgraphit, bevorzugt mit einer Teilchengröße von 0,080 bis 0,300 mm,
10 bis 30 Gewichtsprozent Ammoniumpolyphosphat,
10 bis 20 Gewichtsprozent Aluminiumtrihydrat, bevorzugt ein pulverförmiges mit einer Teilchengröße von nicht mehr als 0,050 mm.

4. Zusammensetzung nach Anspruch 3,
wobei die Zusammensetzung optional weiterhin enthalten kann:
3 bis 10 Gewichtsprozent Melaminpulver, bevorzugt mit einer Teilchengröße von nicht mehr als 0,10 mm,
1 bis 3 Gewichtsprozent Titanoxid als Rutil,
5 bis 10 Gewichtsprozent einer Carbonquelle wie etwa Dipentaerythritol, Stärke,
2 bis 10 Gewichtsprozent Dicyandiamid, das ein Schaum ist, der Gas bereitstellt.

5. Zusammensetzung nach einem oder mehreren der vorstehenden Ansprüche, wobei dieselbe weiterhin enthält: ein zeolithisches Trockenmittel, ein Aluminiumsilicat und Mischungen daraus, um der Zusammensetzung Feuchtigkeitsunempfindlichkeit zu verleihen.

6. Zusammensetzung nach einem oder mehreren der vorstehenden Ansprüche, wobei das Gummipulver weiterhin ein Farbpigment enthält.

## Revendications

1. Composition ignifuge pour revêtement, bouchage, étanchéité et protection contenant : un polymère à durcissement par isocyanate, un isocyanate à durcissement par polymère, un polyéther glycol aliphatique et un caoutchouc,
**caractérisée en ce qu'**elle contient en outre du polyphosphate d'ammonium, du graphite expansé et un sel métallique contenant de l'eau de cristallisation, lequel est non hydrosoluble ou très peu hydrosoluble.

2. Composition selon la revendication 1, dans laquelle le sel métallique contenu dans l'eau de cristallisation est du trihydrate d'alumine.

3. Composition selon les revendications 1 et 2, la composition contenant :
4 à 55 % en poids d'un polyuréthane à durcissement par isocyanate,
10 à 30 % en poids d'un isocyanate à durcissement par polymère,
3 à 10 % en poids d'un caoutchouc à particules d'une taille maximale de 0,4 mm, de préférence sous la forme d'un granulat fin d'une taille ne dépassant pas 0,1 mm,
1 à 5 % d'un polyéther glycol aliphatique,
5 à 10 % en poids de graphite expansé, de préférence à particules d'une taille de 0,080 à 0,300 mm ;
10 à 30 % en poids de polyphosphate d'ammonium,
10 à 20 % en poids de trihydrate d'alumine, de préférence en poudre à particules d'une taille ne dépassant pas 0,050 mm.

4. Composition selon la revendication 3,
la composition pouvant éventuellement aussi contenir :
3 à 10 % en poids de poudre de mélamine, de préférence à particules d'une taille non supérieure à 0,10 mm,
1 à 3 % en poids d'oxyde de titane sous la forme de rutile,
5 à 10 % en poids d'une source de carbone telle que du dipentaérythritol, de l'amidon,
2 à 10 % en poids de dicyandiamide, une mousse dégageant un gaz.

5. Composition selon une ou plusieurs des revendications précédentes, contenant en outre un agent de séchage à base de zéolite, un silicate d'aluminium et des mélanges de ceux-ci pour donner à la composition une absence de sensibilité à l'humidité.

6. Composition selon une ou plusieurs des revendications précédentes, dans laquelle la poudre de caoutchouc contient en outre un pigment de coloration.
